(19) Europäisches Patentamt
European Patent Office
Office européen des brevets

(11) EP 2 268 914 B1

(12) # EUROPÄISCHE PATENTSCHRIFT

(45) Veröffentlichungstag und Bekanntmachung des Hinweises auf die Patenterteilung:
**10.08.2016 Patentblatt 2016/32**

(21) Anmeldenummer: **09733014.6**

(22) Anmeldetag: **27.03.2009**

(51) Int Cl.:
***F02M 59/00*** $^{(2006.01)}$ ***F02M 65/00*** $^{(2006.01)}$

(86) Internationale Anmeldenummer:
**PCT/EP2009/053641**

(87) Internationale Veröffentlichungsnummer:
**WO 2009/127510 (22.10.2009 Gazette 2009/43)**

(54) **VERFAHREN BZW. VORRICHTUNG ZUR ERMITTLUNG DES FÖRDERVOLUMENS EINER EINSPRITZPUMPE**

METHOD AND DEVICE FOR DETERMINING THE FEED VOLUME OF AN INJECTION PUMP

PROCÉDÉ ET DISPOSITIF DE DÉTERMINATION DU VOLUME DÉPLACÉ PAR UNE POMPE D'INJECTION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **15.04.2008 DE 102008001182**

(43) Veröffentlichungstag der Anmeldung:
**05.01.2011 Patentblatt 2011/01**

(73) Patentinhaber: **Robert Bosch GmbH**
**70442 Stuttgart (DE)**

(72) Erfinder:
- **LEHLE, Walter**
  **70771 Leinfelden (DE)**
- **HACKNER, Michael**
  **71672 Marbach (DE)**
- **BLANK, Frederik**
  **69121 Heidelberg (DE)**

(56) Entgegenhaltungen:
**EP-A- 1 674 365**
**EP-B1- 1 226 355**
**DE-A1- 10 334 817**
**DE-C1- 19 625 947**
**US-B1- 7 013 223**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Technisches Gebiet

Die Erfindung betrifft ein Verfahren sowie eine Vorrichtung zur Ermittlung des Fördervolumens einer Einspritzpumpe.

Grundsätzlich ist es überaus einfach, das Fördervolumen einer Pumpe innerhalb einer Prüfanordnung zu ermitteln. Allerdings ist es unerwünscht, zur Ermittlung oder überprüfung der Leistungsfähigkeit einer Einspritzpumpe diese aus dem Einspritzsystem ausbauen und in eine Prüfanordnung einsetzen zu müssen.

Bislang werden auf dem Markt keine nicht invasiven Verfahren oder Vorrichtungen zur Ermittlung des Fördervolumens einer an einem Einspritzsystem installierten Einspritzpumpe angeboten.

Aus der EP 1 226 355 B1 ist nur ein Diagnoseverfahren bekannt, mit dem sich lediglich Hinweise auf unterschiedliche Fehler bzw. Fehlfunktionen einer Einspritzpumpe ohne "invasiven" Eingriff in das Einspritzsystem ermitteln lassen. Bei diesem bekannten Verfahren wird im wesentlichen mittels eines Drucksensors, der als Teil des Einspritzsystems zu dessen Regelung bei der Anpassung an unterschiedliche Last- bzw. Betriebszustände des Motors dient, der zeitliche Verlauf des Druckes auf der Druckseite der Einspritzpumpe erfasst und nachfolgend mit Rechnerunterstützung in ein Frequenzspektrum transformiert, welches bei intakter Einspritzpumpe deutliche Maxima bei der drehzahlabhängigen Basis- bzw. Grundfrequenz der Pumpe sowie bei deren Vielfachen zeigt. Bei einer gemäß der EP 1 226 355 B1 vorgesehenen 3-Kolben-Pumpe liegen die Maxima beider Grundfrequenz $f_1$ sowie der zweifachen sowie dreifachen Grundfrequenz, d.h. bei $f_2 = 2f_1$ und $f_2=3f_1$. Indem nun das Frequenzspektrum der zu prüfenden Pumpe mit einem Standard-Frequenzspektrum einer fehlerfreien Einspritzpumpe verglichen wird, lassen sich, in Abhängigkeit von dem jeweils ermittelten Unterschieden, empirisch verifizierbare Hinweise auf unterschiedliche Fehler der Einspritzpumpe ableiten. Auf diese Weise werden jedoch keinerlei Informationen über das tatsächliche Fördervolumen der zu prüfenden Einspritzpumpe oder deren relative Leistungsfähigkeit im Vergleich zu einem theoretischen Fördervolumen ermittelt Der für die Leistungsfähigkeit einer Einspritzpumpe entscheidende Parameter, das Fördervolumen oder ein äquivalenter Parameter, wird also nicht ermittelt.

Offenbarung der Erfindung

Deshalb ist es Aufgabe der Erfindung, ein Verfahren bzw. eine Vorrichtung zur Ermittlung der Förderleistung einer Einspritzpumpe ohne jeglichen Eingriff in das Einspritzsystem bereit zu stellen.

Diese Aufgabe wird durch die kennzeichnenden Merkmale des Anspruches 1 gelöst.

Die Erfindung beruht auf der Erkenntnis, dass sich durch die an sich bekannte Erfassung des Frequenzspektrums des Druckes auf der Druckseite einer Einspritzpumpe bei entsprechender Informationsverarbeitung durchaus Hinweise auf das Maß der Förderleistung bzw. die Relation der Förderleistung im Vergleich zu einer Standard-Förderleistung ermitteln lassen. Insbesondere wird bei der Erfindung ausgenutzt, dass Ungleichförderungen der Pumpe, d.h. ungleiche Förderleistungen der Pumpenkolben, starke Auswirkungen auf das Frequenzspektrum haben, und die damit einhergehenden Abweichungen von einer Normalleistung der Pumpe mit der erfindungs gemäßen Informationsverarbeitung gut ermittelt werden können.

Durch die gemäß dem Kennzeichen des Anspruches 1 vorgesehene Normierung der erfassten Amplituden der Grundfrequenz $f_1$ und der weiteren charakteristischen Frequenzen $f_2$ bis $f_n$ des Frequenzspektrums werden zufällige Einflüsse auf das Maß der Amplituden ausgeschaltet Die Anzahl n der charakteristischen Frequenzen wird durch die Anzahl der Kolben der Einspritzpumpe bestimmt. Typische Einspritzpumpen besitzen drei Kolben, so dass die charakteristischen Frequenzen $f_1$ bis $f_3$ auftreten. Schließlich wird bei der Erfindung ausgenutzt, dass den Werten verschiedener Quotienten, die aus unterschiedlichen normierten Amplituden gebildet werden, unterschiedliche Wahrheitswerte bzw. Zugehörigkeitsgrade für linguistisch vorgebbare Güteklassen oder-werte (z.B. "gut", "gut-grenzwertig", "mittel", "schlecht" bzw. "defekt") zugeordnet werden können. Hierbei wird eine vorgegebene Logik (insbesondere Fuzzy-Logik) eingesetzt.

Den ermittelten Kombinationen der Güteklassen lassen sich dann empirisch gesicherte Fördervolumina zuordnen.

Die auf diese Weise ermittelten Fördervolumina brauchen dann nur noch mit einem Grenz-Fördervolumen verglichen zu werden, um darüber zu entscheiden, ob die jeweils zu prüfende Einspritzpumpe defekt ist oder nicht bzw. ausgetauscht werden muss oder nicht.

Da bei dem erfindungsgemäßen Verfahren die Erfassung der Signale eines regelmäßig im Fahrzeug vorhanden Drucksensors auf der Druckseite der Einspritzpumpe genügt, besteht die vorteilhafte Möglichkeit, die für die Durchführung des Verfahrens notwendigen Datenverarbeitungsmittel und Speicher im Fahrzeug anzuordnen und gegebenenfalls in einem bei Fahrzeuginspektionen auszulesenden Speicher Hinweise auf ein vermindertes Fördervolumen der Einspritzpumpe auslesbar abzulegen oder für den Fahrer eine Anzeige bereit zu stellen, die den Fahrer zum Besuch einer Werkstatt auffordert, bevor ein weiterer Betrieb des Fahrzeuges wegen eines Defektes der Einspritzpumpe unmöglich wird. Das erfindungsgemäße Verfahren ist jedoch nicht auf Fahrzeuge mit im Fahrzeug vorhandenem Drucksensor beschränkt. Vielmehr ist es bei Einspritzsystemen ohne eigenen Drucksensor auch möglich, die Drucksignale "off-board" durch einen separat, nicht invasiv anzubringenden zusätzlichen Sensor, z.B. einem Klemmdrucksensor, zu erfassen. Damit kann das Verfahren der Erfindung auch bei Altfahrzeugen eingesetzt werden.

Im Übrigen wird hinsichtlich bevorzugter Merkmale der Erfindung auf die Ansprüche und die nachfolgende Erläuterung der Zeichnung verwiesen, anhand der das erfindungs gemäße Verfahren bzw. die zur Durchführung des Verfahrens geeignete Vorrichtung näher beschrieben werden.

Schutz wird nicht nur für ausdrücklich angegebene oder dargestellte Merkmalskombinationen sondern prinzipiell auch für beliebige Einzelmerkmale oder beliebige Kombinationen der Einzelmerkmale der angegebenen oder dargestellten Merkmalskombinationen beansprucht.

Erläuterung der Zeichnung

In der Zeichnung zeigt

Fig. 1 mit den Bildern A und B eine Gegenüberstellung der Leistungsfähigkeit des erfindungsgemäßen Systems und eines Systems gemäß dem Stand der Technik,

Fig. 2 ein Flussdiagramm des erfindungsgemäßen Verfahrens.

Die weiteren Fig. zeigen Einzelheiten der Erfindung bzw. des zugehörigen technologischen Hintergrundes.

Zur Vereinfachung der Darstellung wird nachfolgend davon ausgegangen, dass die Einspritzpumpe drei Kolben hat.

In Fig. 1 ist im Bild A das Verfahren der EP 1 226 355 B1 nach Art einer "Blackbox"-Darstellung verdeutlicht: Das System der EP 1 226 355 B1 benötigt eingangsseitig die Werte des Druckes p auf der Druckseite der Einspritzpumpe. Ausgangsseitig können dann Hinweise auf unterschiedliche Fehler $F_1$ bis $F_n$ gegeben werden. Damit sind jedoch keine quantitativen Hinweise auf das Fördervolumen der jeweiligen Pumpe verbunden.

Das Bild B verdeutlicht nun die Vorzüge der Erfindung, wiederum in einer "Blackbox"-Darstellung. Bei der Erfindung werden eingangsseitig wiederum die Werte des Druckes p auf der Druckseite der Einspritzpumpe erfasst. Bei erfindungsgemäßer Auswertung lässt sich damit eine Maßzahl für das Fördervolumen FVbzw. ein Maßzahlenbereich des Fördervolumens anzeigen. Das so ermittelte Fördervolumen kann nun, falls gewünscht, automatisch mit einem definierten, minimal zulässigen Fördervolumen verglichen werden. Sollte das ermittelte Fördervolumen kleiner sein als das minimal zulässige Fördervolumen wird eine Anzeige "Einspritzpumpe austauschen" erzeugt. Falls das ermittelte Fördervolumen hinreichend nahe am definierten, minimal zulässigen Fördervolumen ist, kann gegebenenfalls in einem Diagnosespeicher oder dergleichen ein Hinweis auf eine verminderte (aber ausreichende) Förderleistung abgelegt werden. Bei ausreichender Förderleistung unterbleibt eine solche Anzeige, und es erfolgt kein Eintrag in den Diagnosespeicher.

Die Fig. 2 zeigt nun ein Flussdiagramm zur Erfindung. Zunächst wird beim Betrieb des Einspritzsystems gemäß Position 100 der Druck p in Abhängigkeit von der Zeit t auf der Druckseite der Einspritzpumpe aufgezeichnet. Danach erfolgt gemäß Position 101 eine Transformation der aufgezeichneten Daten, um ein Frequenzspektrum der Pumpe zu ermitteln. Nachfolgend werden bei 102 die Amplituden Ades Frequenzspektrums für die (drehzahlabhängige) Frequenzen $f_1$ und Oberfrequenzen $f_2$ und $f_3$ ermittelt Nachfolgend werden gemäß Position 103 normierte Amplituden $m_1$, $m_2$, ermittelt, indem Quotienten aus der Amplitude der Frequenz $f_1$ und der Amplitude der Frequenz $f_3$ sowie der Amplitude der Frequenz $f_2$ und der Amplitude der Frequenz $f_3$ gebildet werden. (Bei einer Einspritzpumpe mit mehr als drei Kolben sollten entsprechend mehr normierte Amplituden ermittelt werden.)

Gemäß Position 104 können dann aufgrund von Expertenwissen welches in einem Speicher abgelegt ist, den Werten der normierten Amplituden $m_j$ Qualitätsklassen $Q(m_j)$ zugeordnet werden, beispielsweise die Klassen "gut", "gut-grenzwertig", "mittel", "schlecht" bzw. "defekt". Die Anzahl der Klassen kann nach gewünschter Genauigkeit vorgegeben werden, d.h. der Bereich der möglichen Werte von $m_1$ und $m_2$ wird in prinzipiell frei wählbare Klassen unterteilt

Aufgrund empirischer Befunde können Wertebereichen von $m_1$ beispielsweise fünf Klassen, d.h. fünflinguistischen Werten, (beispielsweise "gut", "gut-grenzwertig", "mittel", "schlecht" bzw. "defekt") zugeordnet werden. Nachfolgend werden diese linguistischen Werte für $m_1$ mit $LV_{1,1}$ bis $LV_{1,5}$ bezeichnet. In ähnlicher Weise werden die Wertebereiche von $m_2$ drei linguistischen Werten $LV_{2,1}$ bis $LV_{2,3}$, beispielsweise "gut", "mittel" bzw. "defekt" zugeordnet. Dies ist in Fig. 3 dargestellt, wobei gleichzeitig den linguistischen Werten $LV_{1,1}$ bis $LV_{1,5}$ in Abhängigkeit von dem jeweiligen Wert von $m_1$ unterschiedliche Wahrheitswerte $\mu$ zwischen 0 und 1 zugeordnet werden. Dabei sind die Wahrheitswerte $\mu$ derart zugeordnet, dass die Summe der Wahrheitswerte für jeden Wert von $m_1$ bzw. $m_2$ die Summe 1 hat. Im Beispiel der Fig. 3 ist dies dadurch gewährleistet, dass als Zugehörigkeitsfunktion der Werte von $m_1$ bzw. $m_2$ zu den jeweiligen linguistischen Werten, beispielsweise Dreiecke, verwendet werden.

Es wird eine unscharfe Logik verwendet, welche eine unscharfe Klassenbeschreibung erlaubt. Dieses Verfahren hat zwei wesentliche Vorteile im Vergleich zu anderen Klassifikationsverfahren:

- Verbale Beschreibung der Klassen durch Regeln
- Robuste Methode gegenüber Störungen

So ist es möglich verbales Expertenwissen aus der Pumpenentwicklung oder von Werkstattmeistem in die Klassenbeschreibung einließen zu lassen. Eine solche Regel könnte lauten:

WENN $m_1$ = gut UND $m_2$ = gut DANN ist das Pumpenförderraten-Verhältnis (PFV) = 100 %.

Des Weiteren, da die Klassen nicht durch scharfe Grenzen unterteilt werden, beeinflussen Störungen (z.B. durch Temperatur- und Druckschwankungen oder Messrauschen) das Klassifikationsergebnis weniger.

Der Wahrheitswert bzw. Zugehörigkeitsgrad $\mu$ zu einer Klasse kann Werte gemäß den obigen Ausführungen zwischen 0 und 1 annehmen und beschreibt, wie stark die Zugehörigkeit eines Merkmals zu einer bestimmten Klasse bzw. linguistischen Variablen ist. Die Klassen werden gemäß den obigen Ausführungen so gewählt, dass die Summe der Zugehörigkeitsgrade für alle Werte von $m_1$ und $m_2$ immer den Wert 1 ergibt, d.h.

$$\sum_j \mu_{LV1,j}(m_1) = 1$$

und

$$\sum_{j.} \mu_{LV2,j}(m_2) = 1$$

Die Spitzenwerte der Zugehörigkeitsfunktionen der Fig. 3 können in der folgenden Tabelle dargestellt werden:

| Regel | $\mu_{LV1/2,1}$ = 1 (gut) | $\mu_{LV1/2,2}$ = 1 | $\mu_{LV1/2,3}$ = 1 | $\mu_{LV1/2,4}$ = 1 | $\mu_{1/2,5}$ = 1 (defekt) |
|---|---|---|---|---|---|
| $m_1$ | 1 | 2 | 3 | 4 | 5 |
| $m_2$ | 1 | 2 | 3 | -- | -- |

Nun erfolgt in Position 105 der Fig. 2 eine Zuordnung der Klassen zum Pumpenförderratenverhältnis. Dies wird ab initio

a) durch Expertenwissen möglich, wobei in diesem Fall Pumpenentwickler einmal Aussagen zur Güte eines Pumpentyps anhand von beliebigen Klassen für das Pumpenförderratenverhältnis (gut, grenzwertig, mittel, schlecht oder defekt) treffen müssen, oder

b) über eine projektspezifische Mengenbilanzrechnung für ein Motorenprojekt erreicht, wodurch die Zuordnung der Pumpen zu o.g. Klassen für das Pumpenförderratenverhältnis über das Erfüllen der Mengenbilanz des Hochdruckeinspritzsystems erfolgt, 80% Pumpenförderratenverhältnis erfüllen z.B. die Mengenbilanz gut, 60% Förderratenverhältnis erfüllen z.B. die Mengenbilanz nicht (Defektfall).

Ausgehend von den Messungen sowie Aussagen aus der Pumpenentwicklung und Mengenbilanzrechnungen kann eine Regelbasis für die Pumpenbeurteilung anhand der Merkmale $m_1$ und $m_2$ aufgestellt werden. Die folgende Tabelle gibt ein Beispiel für eine solche Regelbasis, in welcher das Expertenwissen mit den Merkmalen verknüpft wird. Sie hilft, das Pumpenförderratenverhältnis für jeden linguistischen Wert in Abhängigkeit von der Klassenzugehörigkeit des Merkmals abzuschätzen.

| | | $m^1$ | | | | |
|---|---|---|---|---|---|---|
| | PFV[%] | gut | gut-grenzwertig | mittel | schlecht | defekt |
| $m^2$ | gut | 100 | 90 | 80 | 70 | 60 |
| | mittel | 90 | 90 | 80 | 70 | 60 |
| | schlecht | 80 | 80 | 80 | 70 | 60 |

wobei:

$$PFV[\%] = \frac{gemessenePumpenförderrate}{theoretischePumpenförderrate} \bullet 100$$

Die Regeln in dieser Tabelle lassen sich folgendermaßen ablesen:

$$\text{WENN } m_1 = \text{gut UND } m_2 = \text{mittel, DANN PFV} = 90\%$$

Die oben genannten Regeln werden entsprechend der Fuzzy-Logik-Theorie beispielsweise in den Schritten Fuzzifizierung, Aggregation, Implikation, Akkumulation und Defuzzifizierung miteinander verknüpft und verarbeitet

Die UND-Verknüpfung (Aggregation) aus den Regeln wird beispielsweise mittels eines Minimum-Operators durchgeführt:

$$\mu_{res,i} = \min\{\mu_{LV1,k}(m_1), \mu_{LV2,j}(m_2)\}$$

wobei:

$\mu_{res,i}$ = Ergebnis der unscharfen Zugehörigkeitsfunktion für Regel i $\mu_{LV1,K}$ = Zugehörigkeits grad $m_1$ zur Klasse k $\mu_{LV2j}$ = Zugehörigkeitsgrad $m_2$ zur Klasse j

Es folgt die Implikation, die die WENN-DANN-Verknüpfung ausführt. Wählt man hier, wie beispielhaft in Fig. 4 dargestellt ist, für die Konklusion (DANN-Teil) Singleton-Zugehörigkeitsfunktionen, entspricht der Zugehörigkeitsgrad der Konklusion jeder einzelnen Regel dem resultierenden Zugehörigkeitsgrad $\mu_{res,i}$ der Prämisse (WENN-Teil). Fig. 4 verdeutlicht an einem Beispiel die Operationen.

In einem nächsten Schritt muss das Implikationsergebnis aller Regeln verknüpft werden. Dazu wird beispielsweise ein Maximum-Operator verwendet:

$$\mu_{akk}(PFV) = \max\{\mu_{res,i}(m_1,m_2,PFV),\ldots,\mu_{res,I}(m_1,m_2,PFV)\}$$

Ein mögliches Ergebnis der Akkumulation ist beispielhaft in Fig. 5 dargestellt.

Eine abschließende Aussage zum Pumpenförderraten-Verhältnis erhält man in Position 106 der Fig. 2 durch eine Defuzzifizierung wie folgt:

$$\hat{PFV} = \frac{\sum_{i=1}^{N} PFV_i \cdot \mu_{akk}(m_{i,1}, m_{i,2}, PFV_i)}{\sum_{i=1}^{N} \mu_{akk}(m_{i,1}, m_{i,2}, PFV_i)}$$

Das Ergebnis ist das geschätzte Pumpenförderratenverhältnis in Prozent ($\hat{PFY}$). Die Verhältnisbildung und prozentuale Darstellung ist zur besseren Einschätzung der Förderrate gewählt worden, jedoch könnte auch mit direkten Pumpenförderraten gearbeitet werden.

$PFV_i$ bezeichnet das Förderratenverhältnis in Prozent an der Stelle i nach der Aggregation. $\mu_{agg,i}$ ist die resultierende Zugehörigkeitsfunktion nach Akkumulation aller Regeln an der Stelle i.

Nun kann in Position 107 der Fig. 2 noch ein Vergleich von $\hat{PFV}$ mit einem empirisch vorgegebenen Wert $PFV_{min}$ erfolgen, wobei dann in Abhängigkeit vom Ergebnis des Vergleichs eine Handlungsanweisung, z.B. "Pumpe austauschen" gegeben werden kann.

## Patentansprüche

1. Verfahren zu Ermittlung des Fördervolumens einer Einspritzpumpe, wobei ein zeitlicher Verlauf des Druckes auf der Druckseite der Einspritzpumpe erfasst und in ein Frequenzspektrum transformiert wird, **dadurch gekennzeichnet,**

   - **dass** für eine vorgegebene Basisfrequenz ($f_1$) sowie Vielfache ($f_2$, $f_3$) der Basisfrequenz ($f_1$) erfasste Amplituden auf die Amplitude der vorgegebenen Basisfrequenz ($f_1$) normiert werden, indem Quotienten ($m_1$, $m_2$) aus der Amplitude der Vielfachen ($f_2$, $f_3$) und der Amplitude der Basisfrequenz ($f_1$) gebildet werden;
   - **dass** den Werten dieser Quotienten ($m_1$, $m_2$) durch eine vorgegebene Fuzzy-Logik empirisch ermittelte nummerische Wahrheitswerte ($\mu_k$) für vorgegebener Leitklassen zugeordnet werden, wobei die Summe der Wahrheitswerte ($\mu_k$) über alle Leitklassen für jeden Quotienten ($m_1$, $m_2$) gleich 1 ist; und
   - **dass** die aus den so bestimmten Quotientenkombinationen ermittelten Leitklassenkombinationen unter Nutzung gespeicherter Daten in Maße oder Maßbereiche des Fördervolumens umgesetzt werden.

2. Verfahren nach Anspruch 1,
   **dadurch gekennzeichnet, dass** die für die Basisfrequenz sowie deren Vielfache erfassten Amplituden auf die Amplitude des größten erfassten Vielfachen ($f_3$) der Basisfrequenz ($f_i$) normiert werden.

3. Verfahren nach Anspruch 1 oder 2,
   **dadurch gekennzeichnet, dass** der zeitliche Verlauf des Druckes auf der Druckseite der Einspritzpumpe mittels eines als Teil eines Einspritzsystems angeordneten Drucksensors erfasst wird.

4. Verfahren nach Anspruch 1 oder 2,
   **dadurch gekennzeichnet, dass** der zeitliche Verlauf des Druckes auf der Druckseite der Einspritzpumpe mittels eines externen, nicht invasiv anbringbaren Drucksensors erfasst wird.

5. Verfahren nach einem der Ansprüche 1 bis 4,
   **dadurch gekennzeichnet, dass** der zeitliche Verlauf des Druckes mittels eines fahrzeugseitigen Steuergerätes oder mittels eines zusätzlichen externen Datenverarbeitungsgerätes erfolgt.

6. Verfahren nach einem der Ansprüche 1 bis 5,
   **dadurch gekennzeichnet, dass** ein ermitteltes Fördervolumen oder Förderratenverhältnis ($\hat{PFV}$) mit einem empirisch vorgegebenen Grenzwert ($PFV_{min}$) verglichen und in Abhängigkeit vom Ergebnis des Vergleichs eine Handlungs-bzw. Reparaturempfehlung gegeben wird.

7. Vorrichtung zur Durchführung eines Verfahrens nach Anspruch 5,
   **dadurch gekennzeichnet, dass** das Steuergerät bzw. das Datenverarbeitungsgerät an den Ausgang eines Drucksensors auf der Druckseite der Einspritzpumpe anschließbar bzw. angeschlossen ist

8. Vorrichtung zur Durchführung eines Verfahrens nach Anspruch 6,
   **dadurch gekennzeichnet, dass** eine Anzeige für ermittelte Messwerte oder Handlungsempfehlungen vorhanden ist.

## Claims

1. Method for establishing the flow rate of an injection pump, wherein a pressure-time curve on the pressure side of the injection pump is detected and transformed into a frequency spectrum, **characterized**

   - **in that** amplitudes detected for a predetermined base frequency ($f_1$) and for multiples ($f_2$, $f_3$) of the base frequency ($f_1$) are normalized to the amplitude of the predetermined base frequency ($f_1$) by virtue of quotients

($m_1$, $m_2$) being formed from the amplitude of the multiple ($f_2$, $f_3$) and the amplitude of the base frequency ($f_1$);
- **in that** numerical truth values ($\mu_k$) for predetermined guiding classes empirically established by a predetermined fuzzy logic are associated with the values of these quotients ($m_1$, $m_2$), with the sum of the truth values ($\mu_k$) over all guiding classes equalling 1 for each quotient ($m_1$, $m_2$) ; and
- **in that** the guiding class combinations established from the quotient combinations determined thus are converted into quantities or quantity ranges of the flow rate using stored data.

**2.** Method according to Claim 1,
**characterized in that** the amplitudes detected for the base frequency and the multiples thereof are normalized to the amplitude of the largest detected multiple ($f_3$) of the base frequency ($f_1$).

**3.** Method according to Claim 1 or 2,
**characterized in that** the pressure-time curve on the pressure side of the injection pump is detected by means of a pressure sensor arranged as part of an injection system.

**4.** Method according to Claim 1 or 2,
**characterized in that** the pressure-time curve on the pressure side of the injection pump is detected by means of an external pressure sensor, which is attachable in a non-invasive manner.

**5.** Method according to one of Claims 1 to 4,
**characterized in that** the pressure-time curve ensues by means of a vehicle-side control device or by means of an additional external data processing device.

**6.** Method according to one of Claims 1 to 5, **characterized in that** an established flowrate or flow rate ratio ($\hat{PFV}$) is compared to an empirically predetermined threshold ($PFV_{min}$) and an action or repair recommendation is provided depending on the result of the comparison.

**7.** Device for carrying out a method according to Claim 5,
**characterized in that** the control device or the data processing device is connectable or connected to the output of a pressure sensor on the pressure side of the injection pump.

**8.** Device for carrying out a method according to Claim 6,
**characterized in that** there is a display present for established measurement values or action recommendations.

**Revendications**

**1.** Procédé de détermination du volume déplacé d'une pompe d'injection, dans lequel une évolution temporelle de la pression du côté sous pression de la pompe d'injection est détectée et est transformée en un spectre de fréquences,
**caractérisé en ce que**

- pour une fréquence de base prédéterminée ($f_1$) et pour des multiples ($f_2$, $f_3$) de la fréquence de base ($f_1$), les amplitudes détectées sont normalisées à l'amplitude de la fréquence de base prédéterminée ($f_1$) en déterminant des quotients ($m_1$, $m_2$) à partir de l'amplitude des multiples ($f_2$, $f_3$) et de l'amplitude de la fréquence de base ($f_1$);
- des valeurs logiques numériques ($\mu_k$) déterminées empiriquement sont associées aux valeurs desdits quotients ($m_1$, $m_2$) par une logique floue prédéterminée pour des classes principales prédéterminées, dans lequel la somme des valeurs logiques ($\mu_k$) est égale à 1 sur toutes les classes principales pour chaque quotient ($m_1$, $m_2$) ; et
- les combinaisons de classes principales déterminées à partir des combinaisons de quotients ainsi déterminées sont converties en des mesures ou des gammes de mesures du volume déplacé en utilisant des données stockées.

**2.** Procédé selon la revendication 1,
**caractérisé en ce que** les amplitudes détectées pour la fréquence de base et pour les multiples de cette dernière sont normalisées à l'amplitude du multiple détecté le plus grand ($f_3$) de la fréquence de base ($f_1$).

**3.** Procédé selon la revendication 1 ou 2,
**caractérisé en ce que** l'évolution temporelle de la pression du côté sous pression de la pompe d'injection est détectée au moyen d'un capteur de pression prévu en tant que partie d'un système d'injection.

4. Procédé selon la revendication 1 ou 2,
**caractérisé en ce que** l'évolution temporelle de la pression du côté sous pression de la pompe d'injection est déterminée au moyen d'un capteur de pression externe pouvant être monté de manière non invasive.

5. Procédé selon l'une quelconque des revendications 1 à 4,
**caractérisé en ce que** l'évolution temporelle de la pression est déterminée au moyen d'un appareil de commande situé du côté du véhicule automobile ou au moyen d'un appareil de traitement de données externe supplémentaire.

6. Procédé selon l'une quelconque des revendications 1 à 5,
**caractérisé en ce qu'**un volume déplacé ou un rapport de débits de déplacement ($\hat{PFV}$) est comparé à une valeur limite prédéterminée empiriquement ($PFV_{min}$) et **en ce qu'**une recommandation d'intervention ou de réparation est fournie en fonction du résultat de la comparaison.

7. Dispositif destiné à mettre en oeuvre un procédé selon la revendication 5,
**caractérisé en ce que** l'appareil de commande ou l'appareil de traitement de données peut être connecté ou est connecté à la sortie d'un capteur de pression du côté sous pression de la pompe d'injection.

8. Dispositif destiné à mettre en oeuvre un procédé selon la revendication 6,
**caractérisé en ce qu'**un affichage de valeurs de mesure déterminées ou de recommandations d'intervention est présent.

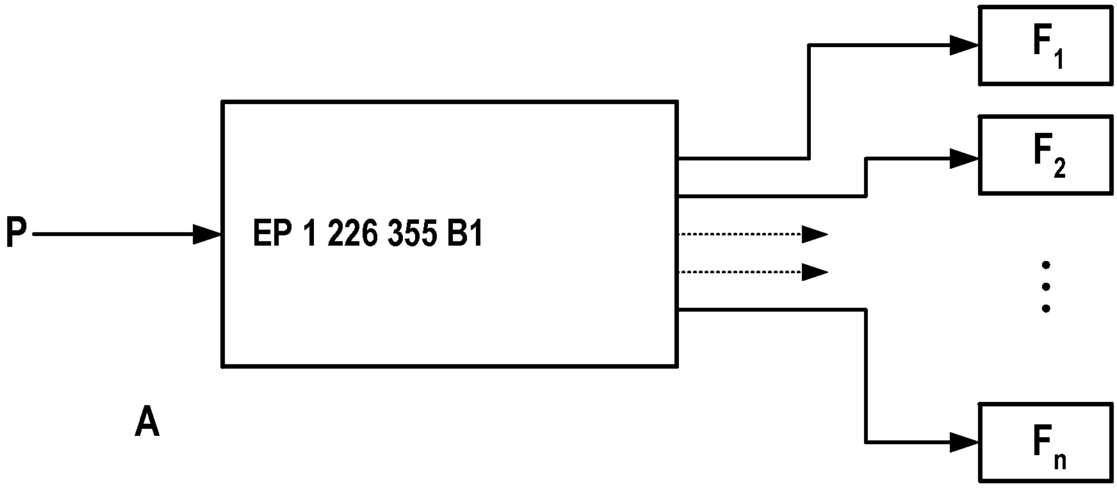


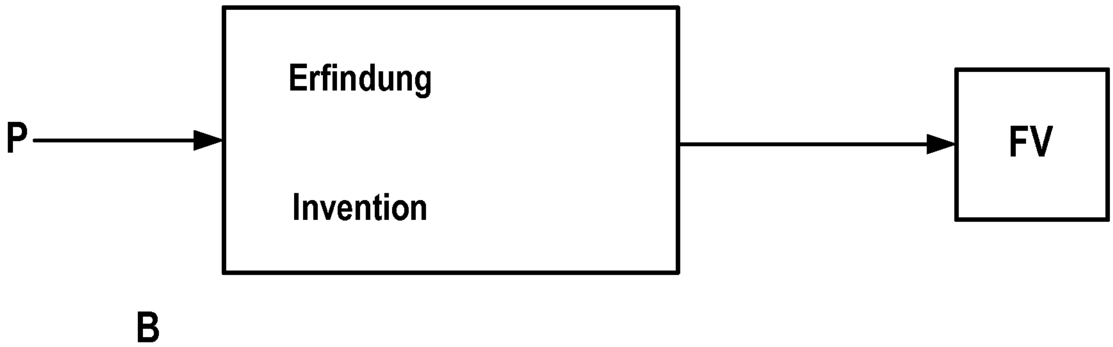


Fig. 1

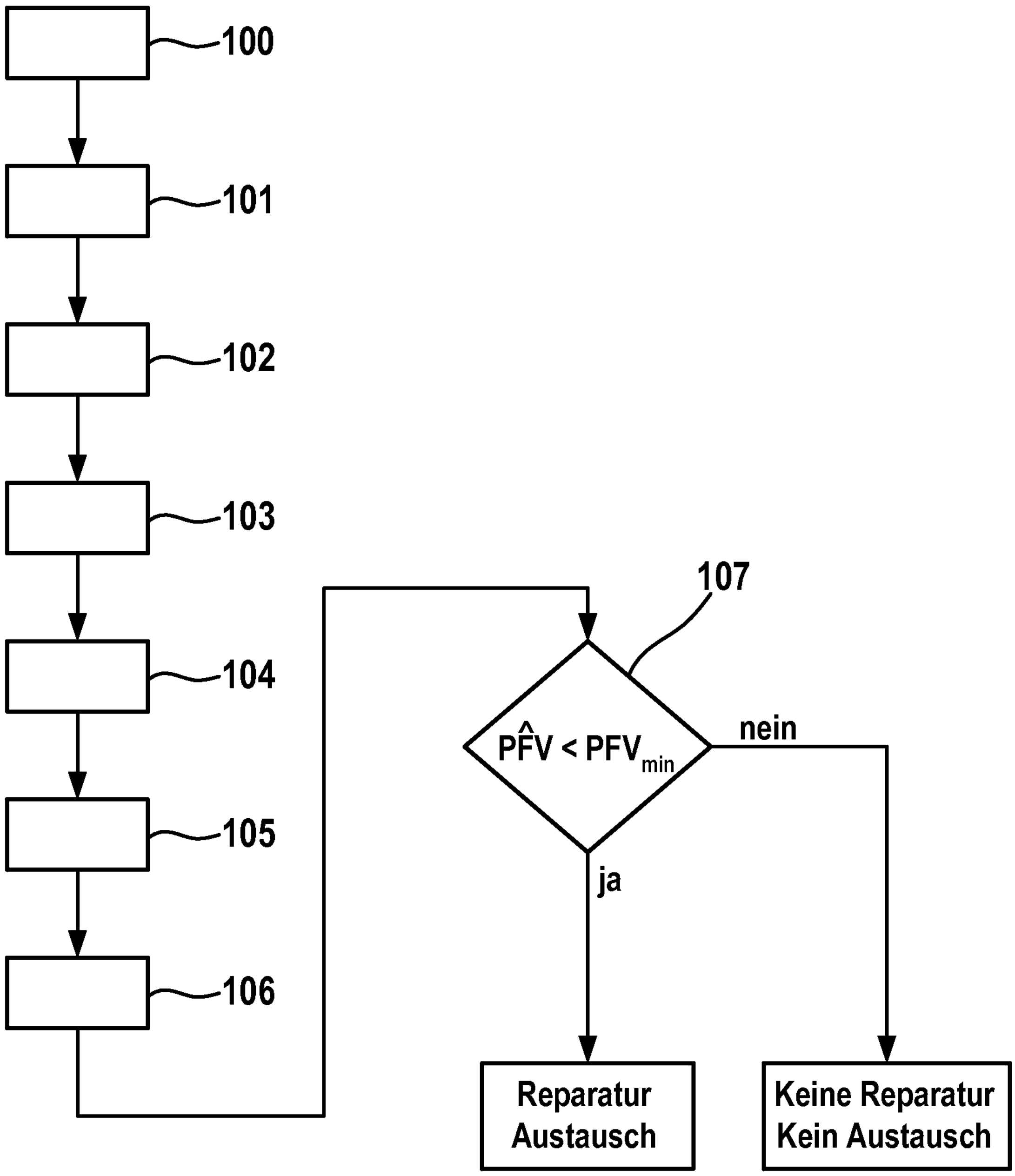
100
101
102
103
104
105
106
107
$\hat{PFV} < PFV_{min}$
nein
ja
Reparatur
Austausch
Keine Reparatur
Kein Austausch

Fig. 2

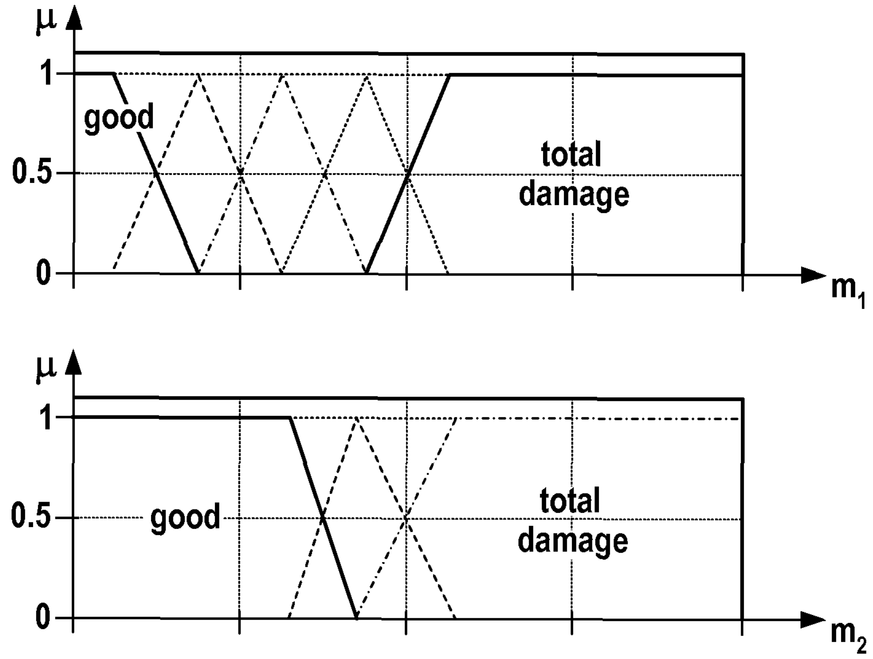


Fig. 3

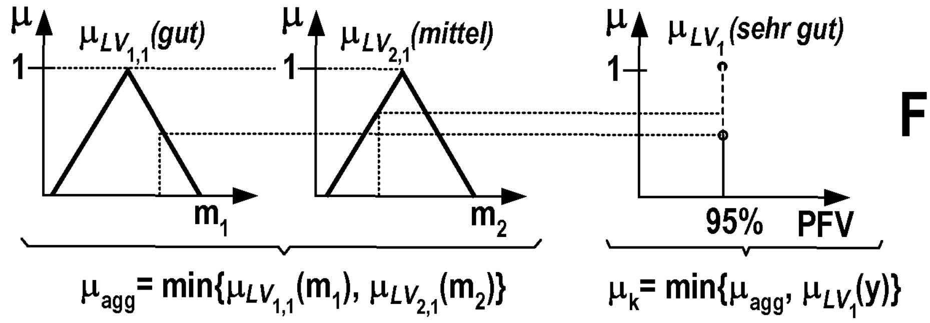


Fig. 4

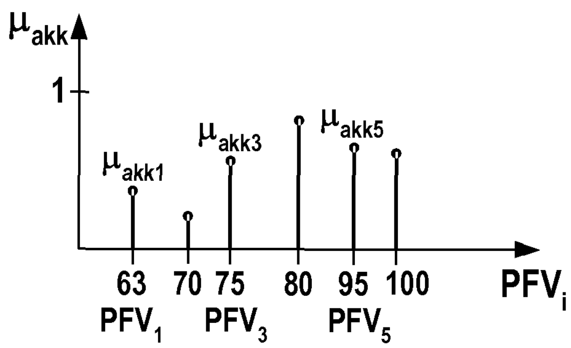


Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1226355 B1